Europäisches Patentamt

European Patent Office

Office européen des brevets

(11) Publication number: **0 244 625 B1**

# EUROPEAN PATENT SPECIFICATION

(45) Date of publication of patent specification: **29.01.92**  (51) Int. Cl.⁵: **G06F 13/14**, G06F 15/16, G06F 15/40

(21) Application number: **87104572.0**

(22) Date of filing: **27.03.87**

(54) **Data base processor and its method of operation.**

(30) Priority: **29.04.86 SE 8601973**

(43) Date of publication of application:
**11.11.87 Bulletin 87/46**

(45) Publication of the grant of the patent:
**29.01.92 Bulletin 92/05**

(84) Designated Contracting States:
**DE FR GB IT**

(56) References cited:
US-A- 3 889 237
US-A- 4 044 337
US-A- 4 078 254

**1-2-3 REFERENCE MANUAL**

**THE DYNAMICS OF DATA BASE**

(73) Proprietor: **International Business Machines Corporation**
**Old Orchard Road**
**Armonk, N.Y. 10504(US)**

(72) Inventor: **Dahlin, Pär Arne**
**Skoldalsvägen 15C**
**S-191 51 Sollentuna(SE)**
Inventor: **Dahlén, Björn Gustaf**
**Vesslevägen 14**
**S-181 09 Lidingö(SE)**
Inventor: **Redziejowski, Roman Richard**
**Ceremonimästarvägen 10**
**S-181 40 Lidingö(SE)**
Inventor: **Sandin, Henrik Emanuel**
**Boholmsstigen 2**
**S-181 46 Lidingö(SE)**

(74) Representative: **Johansson, Lars E. et al**
**IBM Svenska AB Intellectual Property Department 4-01**
**S-163 92 Stockholm(SE)**

EP 0 244 625 B1

## Description

The present invention relates to a data base processor and its method of operation and more particularly to a data base processor comprising data base means storing a plurality of tables and a data base manager including storage initialization and command processing means.

The IBM Service Level Reporter (SLR) Version 2, General Information Manual, GH19-6213-1, May 1984, describes one type of a data base processor, a service level reporter providing management reporting related to performance, availability, operation and the like for a digital computer system, and providing data processing professionals with information to help manage the DP (Data Processing) installation. According to this publication SLR data base collects log data from various subsystems such as TSO(Time Sharing Option), CICS-VS(Customer Information Control System-Virtual Storage), and IMS-VS(Information Management System-Virtual Storage) of the DP installation, and based on this collected information provides a full range of reports covering system overviews, service levels, availability, performance, operation etc.

The IBM Service Level Reporter Program Logic Manual LY19-6212-1 of July 1984 describes the architecture of a known SLR data base including a main line component, a command router and a plurality of command processors. The command processors include a collect, edit, report etc. processors for collecting and editing log data from the DP system in order to create a number of data base tables to be accessed by a user, such as a terminal operator, for reporting purposes.

The IBM Interactive System Productivity Facility (ISPF) General Information manual, GC34-4041-1, September 1985, describes the IBM ISPF facility, a dialog manager providing control of and service for interactive applications. A dialog is a conversation between a user at a terminal and a computer executing a program. ISPF is useful as an interface between a terminal user and a data base manager, such as SLR, for a log processor.

One problem encountered in known data base processors is the complexity of the table data handling when the amount of data to be used for varying applications is increasing.

Another problem encountered in known data base processors such as a SLR processor is that data base capacity shortage may occur. This might be espcially the case when several users with varying access authority are using the processor data base simultaneously with a need for a data collect operation for updating the data base.

It is therefore an object of the invention to provide a data base processor capable of handling complex operations.

It is another object of the present invention to provide a data base processor handling large amount of data for storing and presentation or reporting purpose.

It is also an object of the invention to provide a data base processor with data easily accessable by a user.

It is another object of the invention to provide a data base processor with improved table handling capacity.

It is still another object of the invention to provide a data base processor where data are stored for an optimal access and where the user conveniently can identify and modify data source and data base specifications.

It is also an object of the present invention to provide a data base processor which can be used to control a plurality of data bases.

The present invention is defined in the attached claims.

The present invention relates to a data base processor in a data processing system including data base means storing a plurality of tables, each comprising a number of columns and rows, and a data base manager comprising a main line module for storage area and data base initialization when invoked from a sub system of the data processing system, a plurality of command processors and a command router for receiving a command and passing it to a corresponding command processor. An example of such a data base processor is Lotus 1-2-3®- see for example "1-2-3 Reference Manual" part number 12020, Lotus Development European Corporation, Windsor, GB, 1985. The invention will now be described in more detail with reference to the attached drawings, wherein:

Fig. 1 discloses an overview of a data base processor according to the invention.

Fig. 2 discloses a more detailed block diagram of the data base processor in fig 1.

Fig. 3a-3p discloses panels for a Production Control Dialog according to the present invention.

Fig. 4 is a flowchart for the copy processor operation.

Fig. 5 is a flowchart for the create processor operation.

Fig. 6 is a flowchart for the fit processor operation.

In the table below is set forth a listing of the abbreviations used in the following description of the

invention.

| | |
|---|---|
| CICS/VS | Customer Information Control System/Virtual Storage |
| CPU | Central Processing Unit |
| GDDM | Graphical Data Display Manager |
| IMS/VS | Information Management System/Virtual Storage |
| ISPF | Interactive System Productivity Facility |
| JCL | Job Control Language |
| OPC | Operations Planning and Control |
| RMF | Resource Measurement Facility |
| SLR | Service Level Reporter |
| SMF | Systems Management Facility |
| TSO | Time Sharing Option |
| VS | Virtual Storage |
| VSAM | Virtual Storage Access Method |
| VTAM | Virtual Teleprocessing Access Method |

In the following discussion a SLR log processor will be described as a preferred embodiment of the present invention. It should however be considered that the invention can be used in any similar data base processor without departing from the scope of the invention.

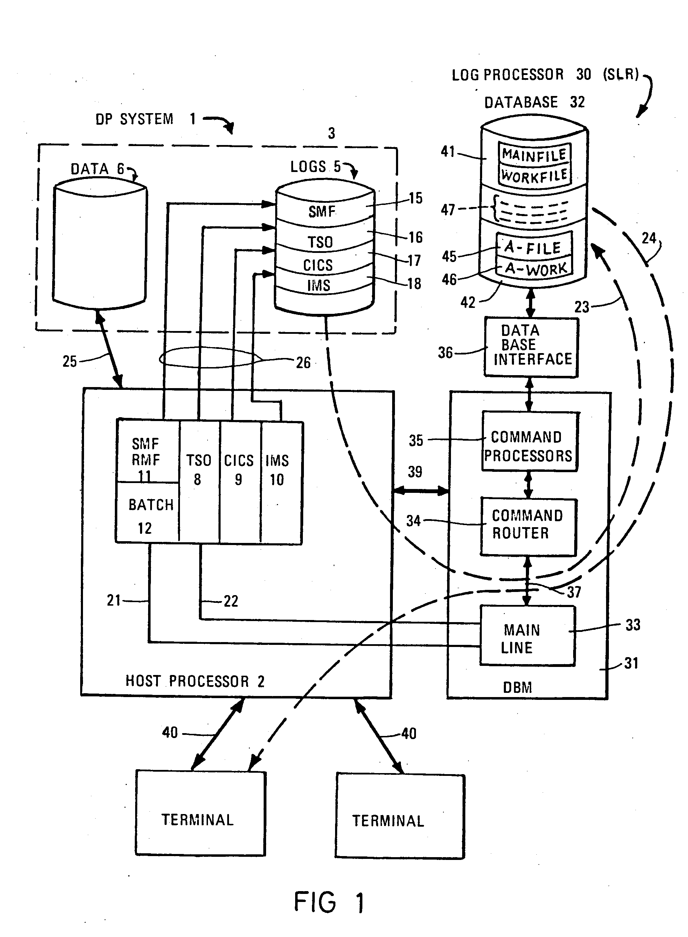

Fig. 1 discloses a SLR log processor 30 operating substantially as a conventional data base processor and being attached to a DP system 1 via an interface 39. The DP system 1 discloses a host processor 2 to which a storage system 3 and a plurality of user terminals 4 are attached over interfaces 40. The storage system 3 comprises conventional data storage means 6 connected via an interface 25 to the host processor 2. A plurality of subsystems such as TSO 8, CICS 9, IMS 10, SMF/RMF 11 and Batch 12 are producing log data via an interface 26 to system logs 6 such as SMF logs 15, TSO logs 16, CICS logs 17 and IMS logs 18.

The SLR log processor 30 comprises a data base 32 and a Data Base Manager (DBM) 31 attached to the data base 32 over a VSAM data base interface 36.

SLR 30 is a log postprocessor that collects data during off-peak hours so that the system performance is not impacted. Records from input logs 5 such as SMF, RMF, CICS-VS, IMS-VS and other logs are collected and analyzed in a collect operation 23 and are written onto predefined logtables into the SLR data base 32.

The SLR data base 32 is built around a VSAM data base allowing data access in a simple table format. The SLR data base may contain historical data collected under periods of years. An end user terminal 4 may display reports created in a presentation or report operation 24 based on data stored in the data base 32. The reports produced can also be printed out in a printer.

Example of SLR reports are system overview reports combining key measurements from several sources. Other reports may disclose the quality and quantity of service provided by the system indicating response times and the quantity of the service provided by various departments or other groupings. Reports can also be provided for various processors, channels and device utilizations or they can disclose information useful for capacity planning or accounting etc. Reports can further be provided on the availability of VTAM network resources, such as application programs, control units and communication lines.

All reports can be presented in full color and graphics using a Graphical Data Display Manager (GDDM).

According to the SLR architecture in fig. 1 the SLR data base manager 31 is invoked from batch 12 or TSO 8 as indicated by lines 21 and 20 to the main line module 33 in DBM 31.

The main line load module 33 is used to initialize main storage areas, service routines and the SLR data base 32.

According to the present invention the SLR data base 32 comprises a plurality of sub data bases including a main data base 41 and at least one auxiliary data base 42. Each sub data base is indentified with a name DBID. The main data base 41 comprises two VSAM data sets called Mainfile 43 and Workfile 44. Similarly the auxiliary data base 42 comprises two VSAM data sets A-file 45 and A-work 46. It should however be considered that the workfile 46 in the auxiliary data base in certain applications can be omitted or it might appear only as a dummy file in data base identification tables, as will be seen later. The points 47 indicate possible other auxiliary sub data bases. It should also be noted that in certain applications the auxiliary data base 42 might be used as the main data base comprising a main data set 45 named MAINFILE, whereas the other data base 41 is used as an auxiliary data base.

A command router 34 is used as an interface between user commands from user interface 4,40 and a plurality of command processors 35. The command router 34 requests a command, scans it to identify its function, and passes a contents of the command to the appropriate command processor. When control is returned to the command router by the command processor, it requests another command and the cycle is repeated. Control is returned to main line 33 via interface 37 when an end command is read.

The purpose of the various command processors in the block 35 is to pass and validate commands and then to carry out the processing required.

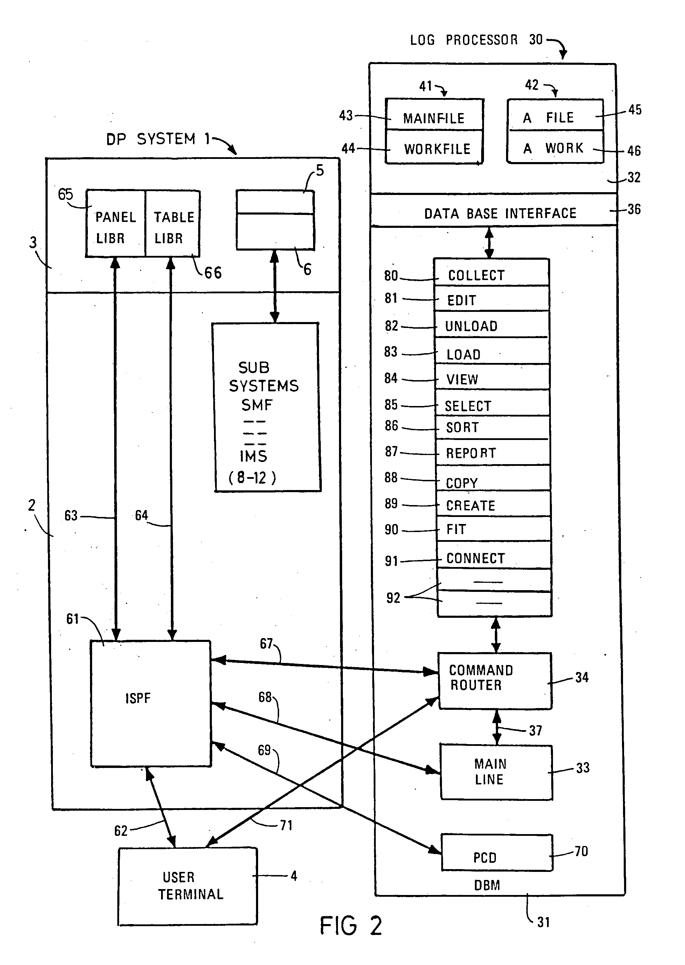

Fig. 2 discloses in more detail the command processor block 35. It discloses also some dialog facilities useful for running the SLR log processor 30, such as the Interactive System Productivity Facility (ISPF) 61. ISPF 61 is attached to a panel library 65 and a table library 66, as indicated by arrows 63 and 64 and more particularly described in the above mentioned ISPF publication.

ISPF 61 can be used to invoke SLR as shown by the arrow 68 to the main line module 33, a similar operation as shown in fig. 1 by the arrows 20 and 21. A terminal user 4 may also use an ISPF dialog for running a report operation 24 as shown in fig. 1, and indicated by the arrows 62 and 67 in fig. 2. Alternatively the user can use a report command language outside of the ISPF environment as indicated by the arrow 71.

A Production Control Dialog (PCD) 70 is using ISPF panel and table service for controlling the relationship between log sources 5 and the various data bases and data sets in the SLR data base 32.

Functional components of PCD are located all over the DP systems such as in ISPF 61 and in sub system 8-12, however the purpose of the PCD is to improve the interaction between the use and the SLR data base manger 31.

The collect processor 80 is used to collect new data from input logs 15-18, Fig. 1. The read input records are used to create new rows in data base tables in the SLR data base 32, or they are used to update existing tables in the data base. The tables created by the collect function include columns and data rows. The columns which contain data uniquely identifying the measurements are called key columns. The columns which contain measurements are called data columns.

The data collected from system logs 5 are first stored in log tables in the data base 32. Data from these log tables are then summarized into summary tables, suitable for reporting purpose. The edit processor 81 is used to display, change or delete data from the data base 32.

The unload command processor 82 is used to produce a sequential file of the data base or selected tables from the data base. Specific columns and rows can be specified for producing the desired subset of the data base.

The load processor 83 is used to read back into the data base the tables which have been unloaded by means of the unload processor.

The view command processor 84 creates a set of control blocks from the information in a view command. A view table contains no stored data and is used at reporting time. It is at reporting time that the data from the tables in the view combination are merged. Thus the view can be regarded as a virtual table. The source tables for the view might be located in different data bases connected with a connect command as will be described later.

The select command processor 85 is used to choose among data in a table.

The sort command processor 86 is used to sort data into desired order.

The report command processor 87 is used to select a table or a view containing the measurement data to be used. An example of a command sequence including report, select and sort commands is given below:

```
REPORT JOBSTAT
    SELECT COL(PROJECT TOT-CPU PERC-CPU LOST-CPU




               LOSTCPU)
    SELECT ROWS(YEAR=83 AND MONTH=DEC)
    SORT SEQUENCE(TOT-CPU DESCEND) MAX(5)
END
```

JOBSTAT - Job Statistics, is a summary table based on statistics from a job log table. It contains summaries of the resources consumed by the jobs run by people in different projects (departments) during different periods of the day (shifts). This command stream will produce a report showing the processor time consumed for each project or department in a descending order of amount of CPU used, as follows:

| Processing Time Used by Project | | | | |
|---|---|---|---|---|
| PROJECT | TOT-CPU MIN | PERC-CPU % | LOST-CPU MIN | LOSTCPU % |
| APPL DEV | 258.6 | 19.9 | 7.8 | 3.0 |
| ENGINEER | 224.8 | 17.3 | 8.3 | 3.7 |
| PROD RUN | 191.6 | 14.7 | 33.3 | 17.5 |
| PURCHASE | 113.6 | 8.7 | 15.7 | 13.8 |
| STAFF | 78.4 | 6.0 | 25.2 | 32.1 |
| TOT-CPU shows the total CPU time consumed by the project. | | | | |
| PER-CPU shows the total CPU time (TOT-CPU) as a percentage of the CPU time consumed by all projects. | | | | |
| LOST-CPU is the summary of all the CPU time for all jobs in the project that abended. | | | | |
| LOSTCPU shows the lost CPU time (LOST-CPU) as a percentage of the total CPU time (TOT-CPU) for the project. | | | | |

The operation of the copy, create and fit command processors (88,89,90) will now be described. The time periods used for data to be copied and created are taken from a calendar table comprising year, month and day time information.

The copy processor 88 is used to take data from one table or a view and store it in another table. A typical example is to take one year's data from selected columns of a table, such as JOBSTAT table, and copy them into another table containing corresponding columns to accommodate the data. The original data in JOBSTAT are left unchanged and can be updated by further collect commands. The copy command processor functions as a subcommand processor to the edit 81 and report 87 command processors.

The copy command includes information about a "TO table" identifying the target table and a data base name indicating the target data base where the target table is located.

The copy processor functions as follows:

All columns within a current selection, selected by a select command, are copied into the target table. A column is always copied to the column in the target table with the same name. The following rules apply:

The source and target column must be of the same type.

Source and target character columns can have different lengths, causing truncation or blank-padding.

If a column within current selection does not have a target column, it is ignored.

Each key column in the target table, which has no source column, is set to TOT (total) if possible, otherwise to 'missing'.

A data column in the target table need not have a source column; it is then filled with "missing".

Each row within the current selection is transformed into a target table row and inserted into the target table, provided that:

The target table does not already contain a row with the same key.

If any of these two conditions is not satisfied, the row is discarded.

The rows already contained in the target table are not affected.

Two examples of the copy function are now described as follows:

Example 1: Copy daily CPU times for year 84 from table JOBSTAT to a table called CPUSTAT (both on the same data base MAINFILE):

```
EDIT JOBSTAT
    SELECT COLUMNS(YEAR MONTH DAY TOT-S-CPU)
    SELECT ROWS(YEAR=84 AND MONTH =TOT AND DAY =TOT)
    COPY TO(CPUSTAT)
END
```

The expression MONTH = TOT means all months in a year (Jan, Febr, ..... Dec) according to the calendar table. Similarly DAY = TOT means all days in a month.

The table JOBSTAT may look as follows:

|  | Keys | | | | Data | |
| --- | --- | --- | --- | --- | --- | --- |
|  | YEAR | MONTH | DAY | SYSTEM | NUMBER JOBS | CPU TIME |
|  | 82 | APR | 10 | SYSA | 1500 | 20 |
| (rows) | 82 | APR | 10 | SYSB | .700 | 15 |
|  | 82 | APR | 10 | SYSC | 900 | 13 |
|  | . | . | . | . | . | . |
|  | . | . | . | . | . | . |
|  | . | . | . | . | . | . |

(columns)

Example 2: Copy the lowest summary level (on the hourly level) for year 1984 from table JOBSTAT on MAINFILE, for instance the data base 41, to table JOBSTAT on data base FORECAST, for instance the data base 42:

```
EDIT JOBSTAT
    SELECT ROWS(YEAR=84 AND MONTH =TOT AND DAY  =TOT
    AND SYSID =TOT AND PERIOD =TOT AND PROJECT =TOT)
    COPY TO(JOBSTAT) DBNAME(FORECAST)
END
```

In the operation the copy processor first reads the first row of the current selection, i.e. the first row of all rows selected by the select processor according to the previous select command, and then stores this row into main storage area initialized by the main line module 33 when invoked. The copy processor then writes said first row from the storage area into the target table. Next the copy processor reads the second row of the current selection into the storage area and then writes it into the target table, and so on row after row until all selected rows have been copied from the source table into the target table.

It should be considered that some checking or modification operations can be performed on row data when stored in the storage area.

The function of the Create command processor 89 will now be described:

The function of Create is to insert a number of rows in a summary table.

A typical use would be, for instance in a forecasting operation, to insert rows corresponding to all days of year 1987, with "missing" in all data columns, The Curve Fit function can then be used to extrapolate the data available for 1986 and write them into the empty columns for 1987.

The Create function is implemented as a sub-command under EDIT; in this way, the rows to be created are defined by means of SELECT ROWS.

This command requires that the table is a summary table, and that the current selection as specified by the SELECT command contains at least one time key.

New rows are inserted into the table so that the table contains rows with all possible combinations of time keys within the current selection. The effect of the command is thus controlled by the preceding SELECT ROWS command. SELECT COLUMNS has only an indirect effect, by implying the defaults for SELECT ROWS.

The current selection, as established by SELECT ROWS, must be such that:

For each time key, the selection allows either a single value TOT (TOT is a summary of all normal values), or a set of one or more normal values (never a set consisting of normal values and TOT).

If any time key has TOT as the allowed value, so must all lower-order time keys. This means, that profiles (an average day in a month, for instance) are not supported.

For each non-time key, the selection allows a single value, which must be either TOT or normal. The selected TOT pattern must be allowed for the table.

The command constructs, one by one, all rows with keys within the current selection (and "missing" in all data columns). If the table does not contain a row with the same key, the created row is inserted in the table; otherwise it is discarded.

Example 1: In the table JOBSTAT, create a row for each day of the year 1987:

```
EDIT JOBSTAT
    SELECT ROWS(YEAR=87 AND MONTH =TOT AND DAY =TOT -
    AND SYSID=MAIN AND PERIOD=TOT AND PROJECT=APPLX)
    CREATE
END
```

SYSID = System identification such as MAIN, SYSA, SYSB etc. PROJECT = Project identification such as APPLX etc.

In all rows, the non-time keys are set to SYSID = MAIN, PERIOD = TOT, and PROJECT = APPLX, and all data columns to "missing".

Example 2: In the table JOBSTAT, create a row for the last six months of year 1986:

```
EDIT JOBSTAT
   SELECT ROWS(YEAR=86 AND MONTH =JUL AND MONTH =DEC
   AND DAY=TOT - AND SYSID=TOT AND PERIOD=TOT AND
   PROJECT=TOT)
   CREATE
END
```

In all rows, the non-time keys are set to TOT, and all data columns to "missing".

The Fit command processor 90 is used to process a curve fit command.

The main function of Curve Fit is to make a forecast based on historical data. However, the function can also be used for interpolation (filling in gaps in the data) and smoothing (calculation of regression curve points).

The Curve Fit function will be mainly invoked from ISPF dialogs. It is implemented as a sub-command under EDIT; in this way, the rows to be operated upon are defined by means of SELECT ROWS.

The Curve Fit command includes as operands a source curve type and as optional operands a target operation. The following curve types are used:

| | |
|---|---|
| LINE | $Y = A + B^*X$ |
| EXPONENTAIL | $Y = A * E^{**}(B^*X)$ |
| POWER | $Y = A * B^{**}X$ |
| HYPERBOLA | $Y = A + B/X$ |
| RECIPROCAL | $Y = 1 / (A + B^*X)$ |
| RATIONAL | $Y = X / (B + A^*X)$ |
| CYCLIC | $Y = A + B^*X + $ cyclic component |

The source is a name of a numeric column in the table.

The target operation tells us what to do with the result. If the operand target operation is omitted, only a message showing the goodness of fit is issued and no data is stored in the data base.

The following operations are supported:

FILL          means that only the places in the target column where the value is "missing" are filled with calculated values (within current selection).

REPLACE     means that the entire contents of the column (within current selection) is replaced.

The target is a name of a numeric column in the table. It must be within current selection. It must not be a key column. It may be the same as the source column.

The FIT command calculates a curve of the indicated type that best approximates all the numeric data in the source column (within current selection).

The table must have time keys. The time keys corresponding to the data are converted to points on the time scale and used as x-coordinates; the data values are used as y-coordinates.

After the curve has been established, it is used to replace all data, or only the missing data, within the current selection in the target column. The data are calculated by converting the time keys to an x-coordinate, and calculating the corresponding y-coordinate on the curve.

Definition of x-values: The value of x-coordinate always expresses the clock time elapsed from some moment chosen as the origin of time count. That means, the actual lenth of all time periods is taken into account, and, for example, January is 10 percent longer than February. This has an influence on the resulting y-values, and a straight line calculated by FIT will not appear straight if all months are presented as having the same length. It should be noted that the different length of time periods requires attention from the user also for another reason: if the data being approximated is in some way dependent on the length of the period, the values for different periods are not exactly comparable, and fitting a curve to them may be meaningless.

If any of the time keys is TOT, it is assumed to have some representative value for the corresponding period. This value is uniquely defined for each key column; in particular, it is:

| | |
|---|---|
| 0 | for HOUR, |
| 1 | for DAY, |
| JAN | for MONTH, |
| 4 | for YEAR (as year 1900 is not a leap year). |

This convention is of little significance as long as the user works with data selected from a single TOT

8

pattern. With several TOT patterns, it may produce unexpected effects. For example, the data pertaining to the whole month of January will be represented by a point corresponding to January 1st, while some users may expect it to be January 15th or January 31st.

If any of the time keys is "missing", the x-value cannot be computed, and the row containing it is bypassed.

Example: The following example shows how to make a forecast for year 1986 based on 1985. The table JOBSTAT contains data for 1985, and a number of rows for 1986 with "missing" in all data columns.

```
EDIT JOBSTAT
    SELECT ROWS((YEAR=86 OR YEAR=85 -
                    AND MONTH =TOT AND DAY =TOT -
                    AND SYSID=MAIN AND PERIOD=TOT -
                    AND GENERATE=APPLX)
        FIT     LINE(COST)          FILL(F-COST)
        FIT     EXPONENT(JOBS)      REPLACE(JOBS)
    END
```

The first FIT command uses all numeric (that is, non-"missing") data within the current selection in the column COST. As the column contains "missing" for all the 1986 rows, the data used are exactly the 1985 data. The command computes the regression line for the data using the least-square method. The points calculated for this line replace then all the "missing" data within the current selection in the column F-COST. Supposing that the entire column contained "missing", we obtain there a linear approximation of the 1985 data, followed by their extension into 1986.

The second FIT command similarly computes an exponential curve that best approximates the 1985 data in the JOBS column; then, it replaces all data in the same column by values calculated from the curve. We obtain thus smoothed 1985 data followed by their extension into 1986.

The COPY, CREATE and FIT command processors 88-90 operated under corresponding copy, create and fit commands can be used for improving the SLR operation. One favourable use of these commands is in a forecasting operation.

The SLR forecasting function enables the user to use historical data in the data base to predict future usage. It requires that SLR is able to take summary table data in the data base as input to some kind of computation, and to store the result of the computation in the data base and produce reports.

For all user applications involving forecasting, the user must specify:

the input, i.e. the historical data:
- type of forecast desired
- time range
- time resolution (thru selection profile, one specific tot pattern)
- other selection criteria (e.g. department name, or system id)
- measurement (e.g. number of jobs, or CPU time)

the output, i.e. the forecasted period
- time range
- forecasting algorithm
- options (e.g. replace/noreplace)
- where to store the forecast (data base name, table name, new key column values)

Several tasks require a forecasting function:

Usage and Performance Planning and Follow-up

Capacity Planning

Accounting

The relations between these tasks and the SLR forecasting function is described below.

Usage and Performance Planning and Follow-up: By creating forecasts for key measurements (such as response times, CPU usage, or line error frequences) in the SLR data base, the user gets an excellent tool to follow up how much the actual values differ from the expected values or objectives.

For instance, the user could create a summary table with the same keys as a summary table ADDRSTAT (the DAY column could be excluded), and the data column TOT-CPU. ADDRSTAT -Address Space Load Statistics, is a summary table containing address space statistics summarized by systems and projects. This table could then be filled with forecast data by means of SLR forecasting, and then, as data is collected into the ADDRSTAT table, reports with the difference between the forecasted and actual CPU time usage can be generated.

Capacity Planning:

The forecasting function can be used to extrpolate the past usage of any resource measured by SLR into the future planning period. The user will have to apply his own judgement when selecting the method of forecasting. In many cases, it is sufficient to multiply the numbers of the past period with a constant (possibly different constants for different user groups, for instance), whereas in other cases, more sofisticated extrapolation methods are needed. Finally, the Edit function is available for expected changes that cannot be extrapolated from the past.

Accounting: The task of accounting for DP services contains several subtasks:

establishing a price per unit

measuring usage

computing charges

billing users

The SLR Forecasting function will be implemented through the COPY, CREATE, and FIT commands.

To be able to run the Forecasting application, the user must have two data bases, one Forecasting data base 41 (ddname MAINFILE, update mode), and a Base data base 42 containing the normal SLR measurement data (user-defined ddname, read mode).

The dialog lets the user select a table in the Base DB (data base), which is copied to an identical table in the Forecast DB. By specifying the forecast timeframe, the user provides the dialog with input to the CREATE command, and finally the FIT command is executed to create the forecast data.

To display the result, the dialog creates a view definition (on the Forecasting DB, as it is the MAINFILE), combining the input table in the Base DB and the new table in the Forecast DB.

There is a need to access more than one SLR data base in the same run, for the following reasons:

1. Some installations have large amounts of SLR data that cannot readily be accomodated in a single VSAM file. These installations already have several data bases; the problem is that they can never be accessed together.

2. Large installations collecting data from many sources may run into problems with the elapsed time for collect runs. The problems could be avoided by running several collect jobs at the same time. This is not possible today, as at most one user can access the data base in the update mode.

Multiple data bases seem a natural solution. One can run several collect jobs against separate data bases, and then access the data bases together in another SLR run.

3. Some functions such as forecasting and accounting, update the data base. With today's architecture, the user must access the data base in the update mode, thus interfering with other users. Giving a user update access to the entire data base is also undesirable for security reasons.

The problem could be partially solved with a single data base. One could normally open the file in read mode, and re-open in update mode only when needed. All update accesses would be thus serialized, causing heavy interference between competing jobs. Some kind of access authorization would have to be implemented with SLR to prevent damage to other tables.

The problem is easily solved with multiple data bases: the forecast tables are placed in a separate file, or files, where their user can access them without causing interference or risking damage to other data.

SLR is started as before, with a single data base (ddname) MAINFILE connected to SLR. To connect another data base, the user issues a CONNECT command, for example:

CONNECT FORECAST UPDATE.

As a result, the data base allocated to ddname FORECAST becomes accessible to SLR, alongside with MAINFILE.

Note that MAINFILE does not need to be the main SLR data base. On the contrary, it seems convenient to start SLR in update mode with a small private data base as MAINFILE, and then connect the main SLR data base in read-only mode, as an auxiliary data base.

A connected data base can be disconnected by means of the command:

DISCONN FORECAST.

The connect-disconnect operation is executed by a Connect command processor 91.

The Production Control Dialog (PCD) 70 provides software tools and establishes a methodology to fully automate SLR data collection. In case of database failure, PCD can be used to re-collect all the logs that have been collected since a backup was taken.

PCD uses ISPF 61 table services to maintain the status of log-datasets from one or more log sources as well as backup datasets for one or more SLR databases.

PCD consists of following major components:

- The online maintenance facility
- The log-logger
- The data collection driver

The dialog is not running under SLR. It is invoked directly from the ISPF master application menu.

The system consists of DBID's (data base identification) and log data set id's (data sources). Each DBID is associated with a MAINFILE, a WORKFILE, and backup data sets. The WORKFILE might be a real data set or a dummy data set. Each data source is associated with a real dataset, a DBID, and a COLLECT statement.

Log data sets and backup data sets are introduced to the system either manually, or by the log-logger. The log-logger is a background job step, which updates the ISPF tables with the names of the data sets which are to be used as Collect input. It must be included in all jobs which create data sets to be used as Collect input, for instance when the SMF data set is dumped.

The data collection driver:

Data sources and DBID's are kept in permanent ISPF tables 66. When a collect is to be run, ISPF is started in the background, and these ISPF tables are opened, and the first Data source is read. The associated DBID entry is picked up to allocate the mainfile and workfile to be used, the JCL member containing the COLLECT statement allocated and the collect is run. The next data source is read and the process continues until all data sources have been processed.

The online maintenance facility is used to perform the following tasks:

- Define one or more databases to PCD.
- Define log-sources and associate them with a database.
- Manually enter log-datasets to be collected by the data collection driver
- Determine the COLLECT status of a log-dataset.
- Determine what backup-dataset should be used to recover a broken database.

The Production Control Dialog is selected from the ISPF master application menu.

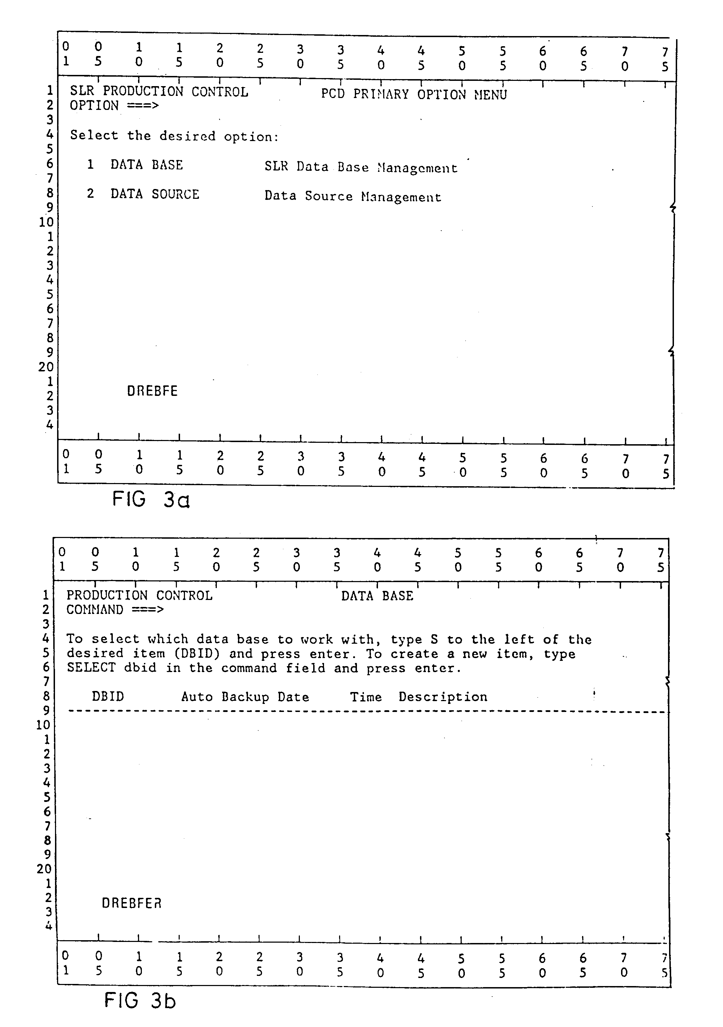

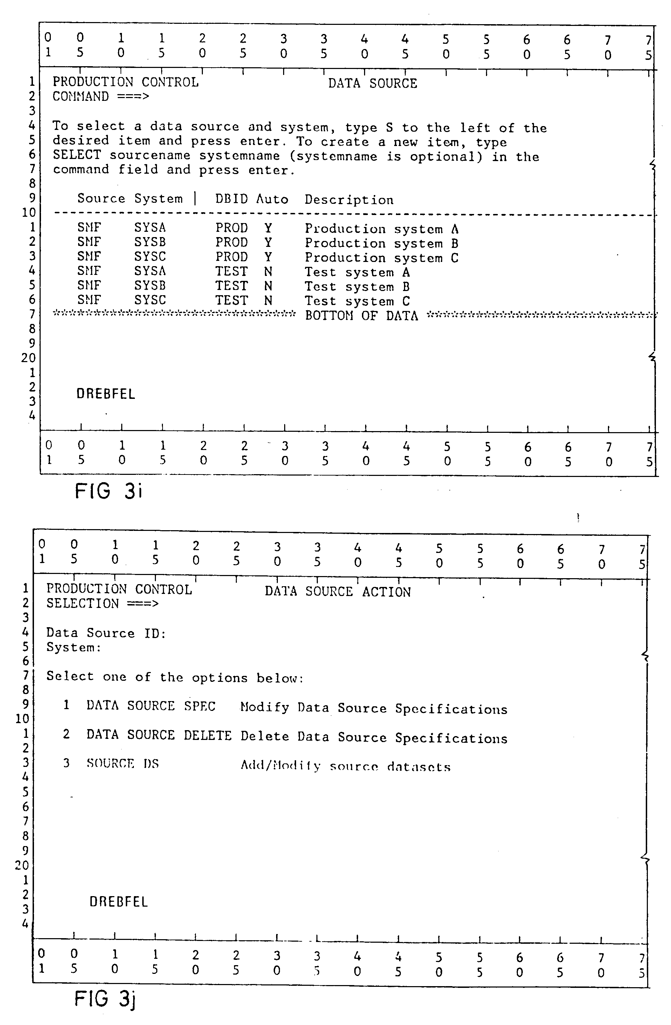

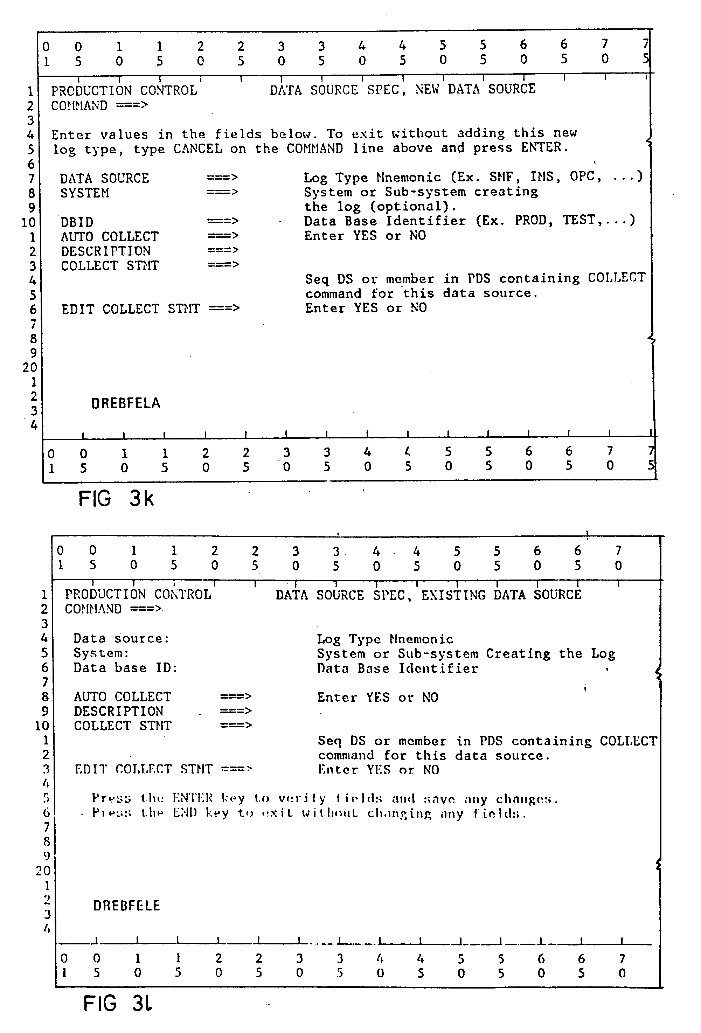

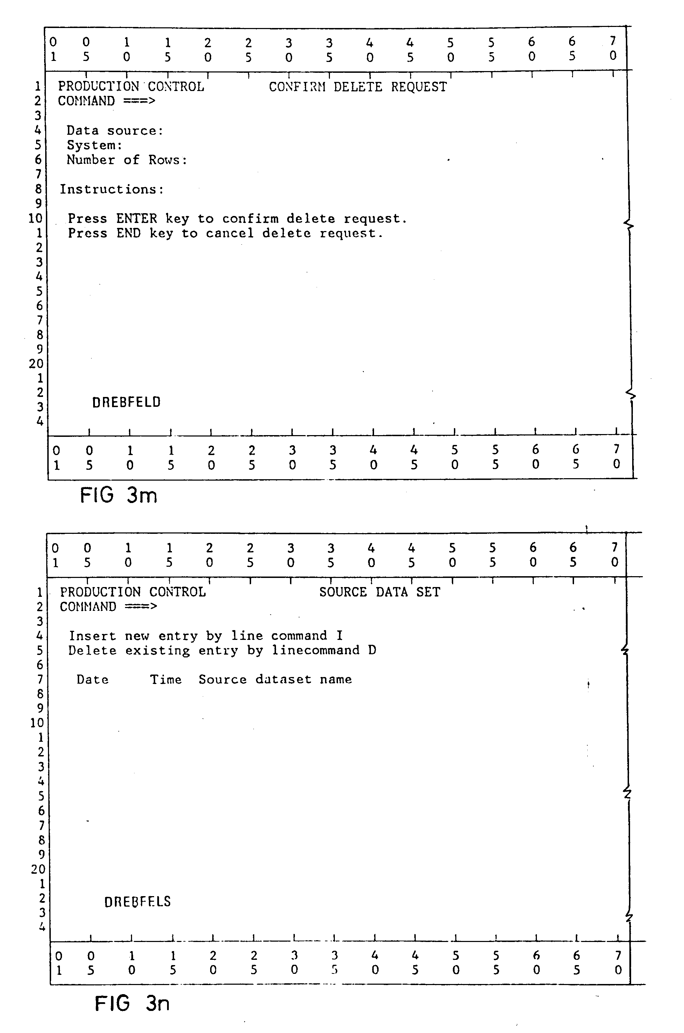

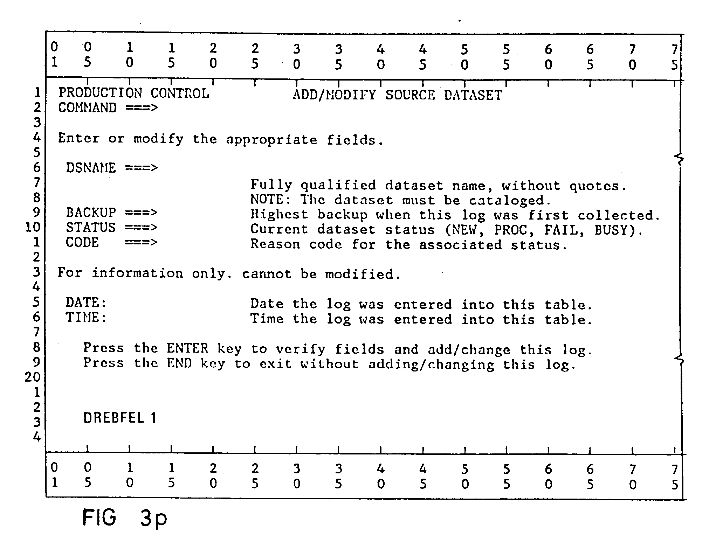

When the user selects PCD, the Production Control primary menu (DREBFE) is displayed, see Fig. 3a. Processing of each of the options in Fig. 3a is described below.

Part of the structure of the PCD panel hierarchy is shown in the following list of PCD panel names. Indentation has been used to indicate the order in which panels are invoked from the top panel. The identation whould be interpreted as follows:

1. A panel whose name is more indented than the panel on the immediately preceding line is invoked by the panel named on the preceding line.
2. A panel whose name is indented less than or equal to the panel on the immediately preceding line is invoked by the panel named on last preceding line that is less indented.

| DREBFE | PCD primary Option Menu | Fig. 3a |
| DREBFER | SLR database definition | Fig. 3b |
| DREBFERX | Select action on database | Fig. 3c |
| DREBFERA | Define a new database | Fig. 3d |
| DREBFERE | Edit a database definition | Fig. 3e |
| DREBFERD | Confirm delete of DB id | Fig. 3f |
| DREBFERS | Backup database tracking | Fig. 3g |
| DREBFER1 | Add or modify backup dataset | Fig. 3h |
| DREBFEL | Log source definition | Fig. 3i |
| DREBFELX | Select action on source | Fig. 3j |
| DREBFELA | Define a new log source | Fig. 3k |
| DREBFELE | Edit a log source definition | Fig. 3l |
| DREBFELD | Confirm delete of log source | Fig. 3m |
| DREBFELS | Log dataset tracking | Fig. 3n |
| DREBFEL1 | Add or modify log dataset | Fig. 3o |

When option 1 in Fig. 3a is selected, a panel DREBFER diclosed in Fig. 3b is shown.

The panel function disclosed in Fig. 3b is used to maintain database definitions and a list of backup datasets associated with each database. One may add, delete or modify a database difinition or one may select a particular database to inspect or modify the backup datasets associated with the selected database.

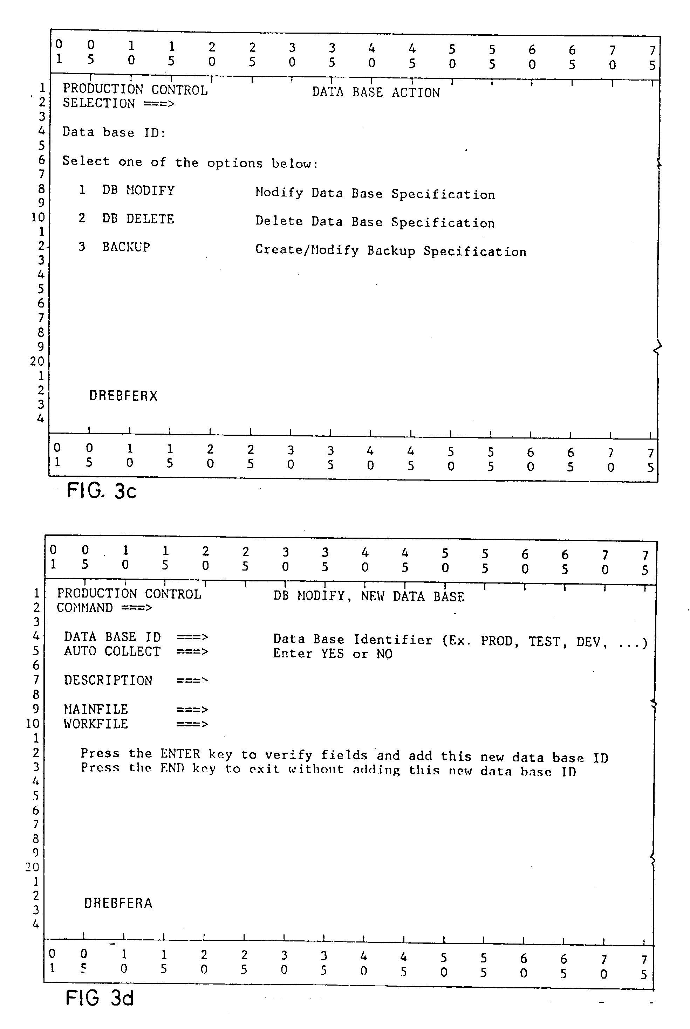

When an existing or new database is selected a selection panel DREBFERX, shown in Fig. 3c, is presented.

If option 1 is selected, a data entry panel is displayed, where the user can change or add information for the database. If the database selected is unknown to PCD then the panel DREBFERA disclosed in Fig. 3d is shown.

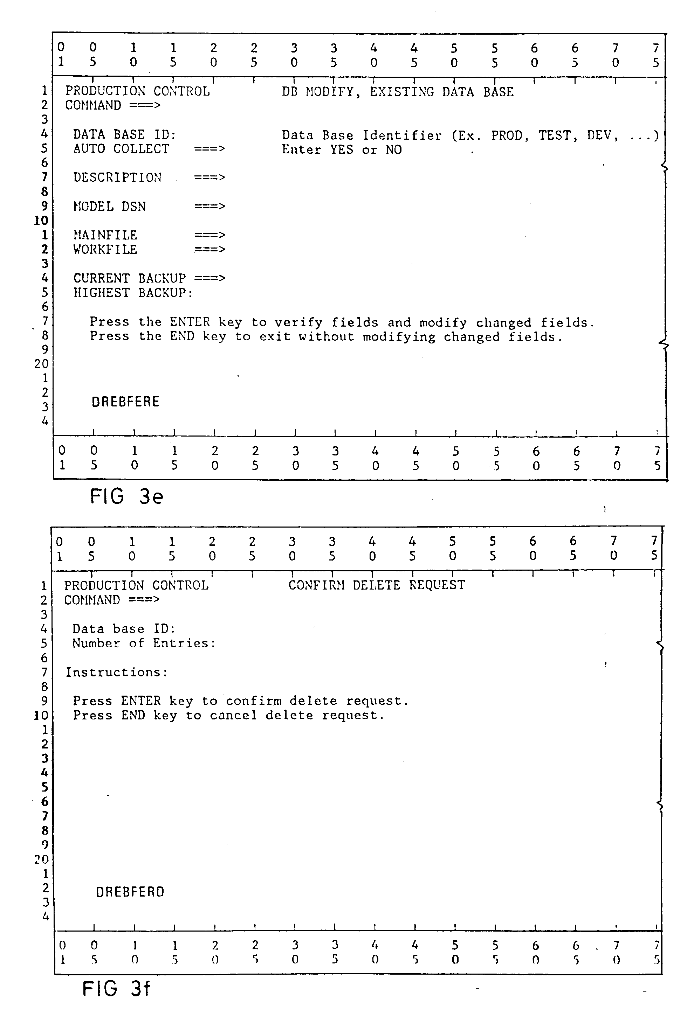

If the database is already known, a slightly different panel DREBFERE is shown, see Fig. 3e.

If option 2 in Fig. 3c is selected, a confirm delete panel DREBFERD is displayed, see Fig. 3f.

If the user presses enter, all information about this database is removed from PCD. If the user presses END, the request is ignored.

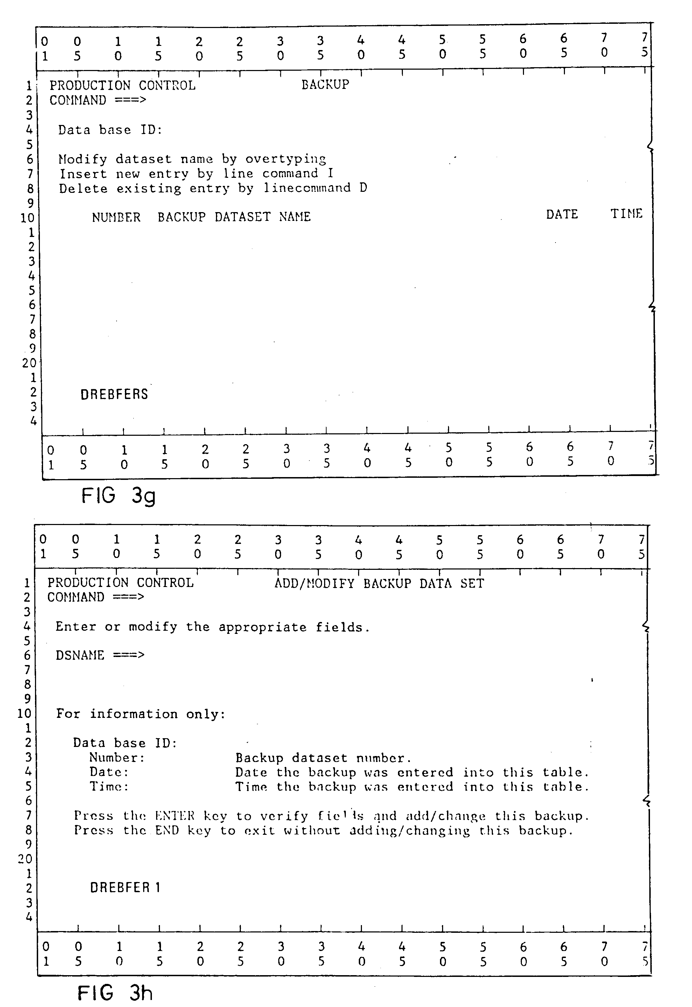

If option 3 in Fig. 3c is selected, see Fig. 3g, the user is presented with a panel DREBFERS including a list of the backup datasets associated with the selected DBID that have been entered either manually or by the automatic log-logger.

From this panel the user may add or delete entries in the list, or change the status of a backup dataset entry. This is handled by line commands, I (insert), and D (delete). If I is entered, a data entry panel DREBFER1 for add/modify backup data set is displayed, see Fig. 3h.

If D is entered, the line is removed from the display.

The production control dialog (PCD) is also used for data source management. Option 2 in the PCD primary option menu (DREBFE), Fig. 3A, is then selected producing a data source panel DREBFEL, Fig. 3i, to be displayed.

This function is used to maintain log-source definitions and the status S of log datasets associated with each log-source. One may add, delete, or modify a log-source definition or one may select a particular log-source to inspect or modify the log datasets associated with that log-source. When an existing or new log source is selected a selection panel DREBFELX, Fig. 3j, is presented.

If option 1 in DREBFELX is selected, a data entry panel is displayed, where the user can change or add information for data sources. If the data source selected is unknown to PCD the panel DREBFELA, Fig. 3k, is shown.

If the data source is already known, a slightly different panel is shown, i.e. the panel DREBFELE, see Fig. 3l.

12

If option 2 in DREBFELX is selected, a confirm delete panel DREBFELD in Fig. 3m is displayed.

If the user presses enter, all information about this source is removed from PCD. If the user presses END, the request is ignored.

If option 3 in DREBFELX is selected, the user is presented with a panel DREBFELS, Fig. 3n, including a list of the log-datasets associated with the selected log-source that have been entered either manually or by the automatic log-logger.

From this panel the user may add or delete entries in the list, or change the status of a log-dataset entry. This is handled by line commands, I (insert), and D (delete). If I is entered, a data entry panel DREBFEL1, Fig. 3p, is displayed. This panel is used for adding/modifying a source log data set.

If D is entered, the line is removed from the display.

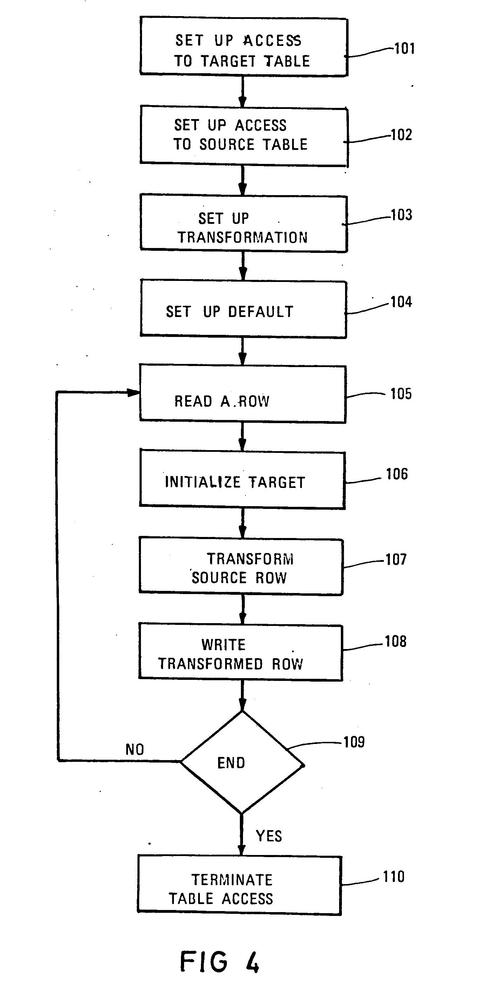

A detailed description of the operation of the copy, create and fit processors will now be given with reference to the figures 4, 5 and 6 respectively.

Fig. 4 is a flowchart for the copy processor 88 operation as follows:

101. Set up access path to target table.

Consists of reading the names, formats, and positions of the data columns in the target rows from the target table definition, allocating buffers, and establishing positions.

102. Set up access path to source table.

Consists of reading the names, formats, and positions of the data columns in the source rows from the source table definition, allocating buffers, and establishing positions.

103. Set up transformation between source and target rows.

Transformation consists of a number of move instructions, each to move a named column at a certain position in the source row into the coresponding named column at another position in the target row. Only those columns within the current selection as specified by the SELECT command will be considered in the source table. Diagnostics are issued at this point for

- columns that are present in the source table but not in the target table (will not be copied),
- columns not present in the source table but that are present in the target table (target column value will be set to missing or TOT as allowed),
- columns in the target table whose values cannot be updated (value will be set to missing),
- columns with the same names but different types (value will be set to missing or TOT as allowed).

104. Set up default target row.

This row has all columns containing missing values.

105. Read a row from the source table.

106. Initialize target row from default row.

107. Transform source row to target format.

Uses the above transformation with input from source row and output to initialized target row.

108. Write transformed row to target table.

109. End. If not, go to 105.

If yes, go to 110.

110. Terminate table access for source and target tables.

Buffers and transformation program are deleted.

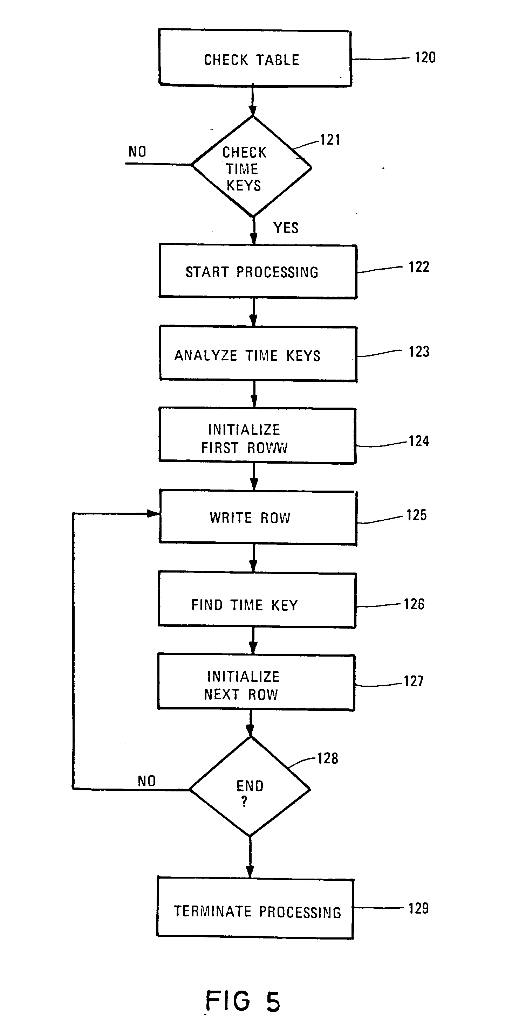

Fig. 5 is a flowchart for the create processor 89 operation as follows:

120. Check that the table has time keys.

121. If not, go to EXIT, if yes go to 122.

122. Start processing for the table.

Allocate buffers.

123. Analyze time keys.

Find out

- Starting point values
- Ending point values
- Number of rows between start and end key Found out by stepping up the lowest time key.

124. Initialize a first possible row.

The row has the lowest possible time key and all data columns set to missing.

125. Write the row to the data base.

Do not replace any existing row.

126. Find next possible time key.

Repeatedly increase the timestamp by one unit of the lowest time key until a valid combination of the time keys is found.

127. Initialize next row.

EP 0 244 625 B1

The row has the calculated time key and all data columns set to missing.

128. End. If not, go to 125.

If yes, go to 129.

129. Terminate processing for the table.

Buffers are deleted.

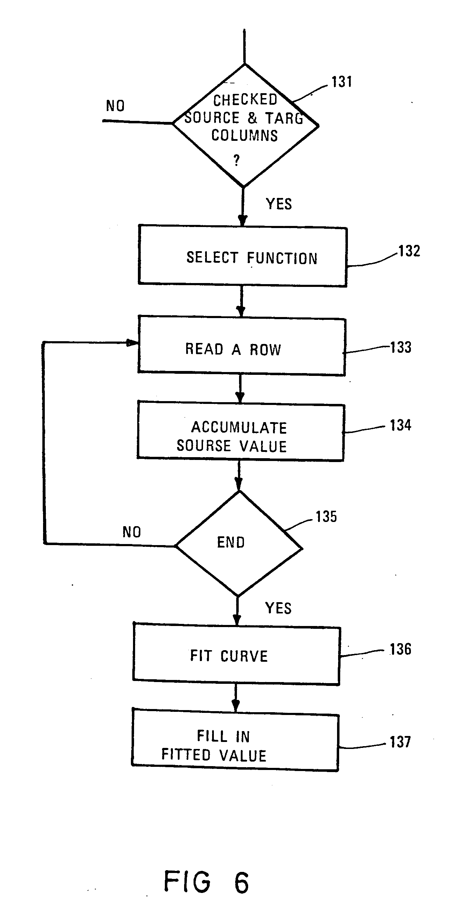

Fig. 6 is a flowchart for the fit processor 90 operation as follows:

Input to the processor is the current column selection as specified by the SELECT command, the target and source column names and the curve fit function as specified in the FIT command.

131. Check that the source and target columns are valid and numeric.

132. Select the specified funcltion.

133. Read a row from the data base.

134. Accumulate source value.

Pass the value from the row to the curve fit routine.

135. End. If no, go to 133.

If yes, go to 136.

136. Fit curve to points.

137. Fill in fitted values on data base.

   a. Calculate key for row

   b. Get value from fitted curve

   c. Put the row.

**Claims**

1. A data base processor for collecting and processing data from sub systems (5, 8-12) in a data processing system, including data base means (32) storing a plurality of tables, each comprising a number of columns and rows, and a data base manager (31) comprising a main line module (33) for storage area and data base initialization, a plurality of command processors (35) and a command router (34) for receiving a command and passing it to a corresponding command processor (80-92), a copy processor (88) amongst said plurality of command processors for receiving a copy command from the command router and for copying selected portions of a source table in the data base into a target table, said selected portions being defined by a select command processor (85), characterized by a create processor (89) for receiving a create command from the command router and for creating selected new rows in the target table, said selected rows being defined by a row select command, selected rows containing at least one key value relating to time, whereby the create processor analyzes the row select command information (123), defines the number of rows to be created, initializes and writes the first row into the target table in a first step (124, 125) and repeats the initialization and writing step (125-128) for further rows until a new row for every possible combination of time keys in the selected range has been created, said created new rows containing information defined by the row select command including in particular said time keys.

2. A data base processor according to claim 1, wherein said row select command information relates to time periods taken from a calendar table comprising year, month, and day time information.

3. A data base processor according to claim 1, wherein said plurality of command processors comprises a fit processor (90) for filing in data into the created new rows.

4. A data base processor according to claim 1, wherein the data base is a VSAM (Virtual Storage Access Method) data base allowing data access in table format and wherein the source table and the target table are located in the same data base (41).

5. A data base processor according to claim 1, wherein the data base is a VSAM data base and wherein the source table is located in a first data base (41) and the target table is located in an auxiliary data base (42), both data bases being controlled by the data base manager (31).

6. A data base processor according to claim 1 and 5, wherein said plurality of command processors comprises a connect processor (91) for connecting and disconnecting the auxiliary data base (42) to and from the first data base (41).

14

7. A data base processor according to any of the claims 1-6, wherein a collect command processor (80) in the data base manager (31) collects data from the sub systems (8-18) of the data processing system and summarizes such data into summary tables in the data base (32) and wherein a report processor (87) in the data base manager transfers selectively summary table data from the data base to a user terminal (4) attached to the system.

8. A data base processor according to claim 7, wherein the processor operates as a log postprocessor collecting data from sub system logs (5, 15-18).

9. A data base processor according to claim 8, wherein the processor operates as a service level reporter providing management reporting related to performance, availability, operation and the like of the data processing system.

10. A data base processor according to any of the claims 1-9, wherein production control dialog means (70) are provided for storing and modifying data base (41, 42) and data source (5, 15-18) specifications.

11. A method of of operation for a data base processor collecting and processing data from subsystems in a data processing system, comprising storing a plurality of tables in data base means (32), each table comprising a number of columns and rows, initializing the data base means by a data base manager (31) comprising a command router (34) and a plurality of command processors (35), receiving a copy command by the command router and passing it to a copy processor (88) amongst said plurality of command processors, defining selected portions of a stored source table in the data base by a select command processor (85) and copying the selected portions by the copy processor into a target table, characterized by transferring a create command from the command router to a create processor (89), defining by a row select command selected new rows to be created in the target table selected rows containing at least one key value related to time, analyzing the row select command information (123) by the create processor, defining the number of rows to be created, initializing and writing the first row into the target table in a first step (124, 125) and repeating the initializing and writing step (125-128) for further rows until a new row for every possible combination of time keys in the selected range has been created, said created new rows containing information defined by the row select command including in particular said time keys.

12. A method according to claim 11, further comprising selectively collecting and transferring data from the sub systems into tables in a first data base (41) of said data base means, said data base means comprising a VSAM data base allowing data access in table format, accessing data from such tables and presenting it on a user unit (4), connecting the first data base (41) to an auxiliary data base (42) in said data base means, copying selected portions of at least one table in the first data base into a corresponding table in the auxiliary data base, and updating said corresponding table, presenting selected table data from both data bases on the user unit and disconnecting said two data bases for enabling an independent data collection and presentation operation for each data base (41, 42).

13. The method according to claim 12, wherein the data presentation operation presents a combined view of table data in the first data base (41) and table data in a corresponding table in the auxiliary data base (42).

14. The method according to claim 12 or 13, wherein the first data base stores first type of data such as actual data and the auxiliary data base stores second type of data such as forecast data.

15. The method according to any of the claims 11-14, wherein said data base means (32) comprises a plurality of data bases (41, 42, 46) and the data processing system comprises a plurality of sub system data sources (15-18) and wherein a production control dialog (70) stores, presents and modifies specifications for the various data bases (41, 42, 46) and their data sources (15-18).

**Revendications**

1. Processeur de bases de données, servant à collecter et traiter des données provenant de sous-systèmes (5,8-12) dans un système de traitement de données, comprenant des moyens formant bases de données (32) mémorisant une pluralité de tables, dont chacune comprend un certain nombre de colonnes et de lignes, et un dispositif (31) de gestion des bases de données, comprenant un module de ligne principale (33) pour l'initialisation d'une zone de mémoire et de bases de données, une pluralité de processeurs (35) de traitement d'ordres et un dispositif (34) d'acheminement des ordres, pour recevoir un ordre et le transmettre à un processeur correspondant de traitement d'ordres (80-92), un processeur de copiage (88) faisant partie de ladite pluralité de processeurs de traitement d'ordres, pour recevoir un ordre de copiage de la part du dispositif d'acheminement des ordres et copier des parties sélectionnées d'une table source située dans la base de données dans une table de destination, lesdites parties sélectionnées étant définies par un processeur (85) de traitement d'ordres de sélection, caractérisé par un processeur de création (89) servant à recevoir un ordre de création à partir du dispositif d'acheminement des ordres et à créer de nouvelles lignes sélectionnées dans la table de destination, lesdites lignes sélectionnées étant définies par un ordre de sélection de lignes, des lignes sélectionnées contenant au moins une valeur de code associée au temps, ce qui a pour effet que le processeur de création analyse l'information (123) de l'ordre de sélection de lignes, définit le nombre de lignes devant être créées, initialise et enregistre la première ligne dans la table de destination, lors d'un premier pas (124,125) et répète le pas d'initialisation et d'enregistrement (125-128) pour d'autres lignes jusqu'à ce qu'une nouvelle ligne pour chaque combinaison possible des codes temporels dans la gamme sélectionnée ait été créée, lesdites nouvelles lignes créées contenant une information définie par l'ordre de sélection de lignes y compris notamment lesdits codes temporels.

2.  Processeur de bases de données selon la revendication 1, dans lequel ladite information d'ordre de sélection de lignes concerne des périodes tirées d'une table de calendrier comprenant une information de temps en année, mois et jour.

3.  Processeur de bases de données selon la revendication 1, dans lequel ladite pluralité de processeurs de traitement d'ordres comprend un processeur d'adaptation (90) servant à introduire des données dans les nouvelles lignes créées.

4.  Processeur de bases de données selon la revendication 1, dans lequel la base de données est une base de données VSAM (méthode d'accès en mémoire virtuelle) permettant un accès des données dans le format de la table, et dans lequel la table source et la table de destination sont situées dans la même base de données (41).

5.  Processeur de bases de données selon la revendication 1, dans lequel la base de données est une base de données VSAM et dans lequel la table source est située dans une première base de données (41) et la table de destination est située dans une base auxiliaire de données (42), les deux bases de données étant commandées par le dispositif (31) de gestion des bases de données.

6.  Processeur de bases de données selon les revendications 1 et 5, dans lequel une pluralité de processeurs de traitement d'ordres comprennent un processeur de connexion (14) pour connecter et déconnecter la base auxiliaire de données (42) à et de la première base de données (41).

7.  Processeur de bases de données selon l'une quelconque des revendications 1-6, dans lequel un processeur (80) de traitement d'ordres de collecte situé dans le dispositif (32) de gestion des bases de données collecte des données provenant des systèmes (8-18) du système de traitement de données et résume de telles données dans des tables résumées situées dans la base de données (32) et dans lequel un processeur de report (87) situé dans le dispositif de gestion des bases de données transfère de façon sélective des données de tables de résumé depuis la base de données jusqu'à un terminal d'utilisateur (4) raccordé au système.

8.  Processeur de bases de données selon la revendication 7, dans lequel le processeur travaille selon un post-processeur de fichiers-journaux, collectant des données à partir de fichiers-journaux de sous-systèmes (5,15-18).

9.  Processeur de bases de données selon la revendication 8, dans lequel un processeur fonctionne en tant que dispositif de signalisation de niveau de service fournissant une signalisation de gestion associée à la performance, la disponibilité, le fonctionnement et autre du système de traitement de données.

**10.** Processeur de bases de données selon l'une quelconque des revendications 1-9, dans lequel des moyens interactifs de commande de production (70) sont prévus pour mémoriser et modifier des spécifications de bases de données (41,42) et de sources de données (5,15-18).

**11.** Procédé d'exploitation d'un processeur de bases de données collectant et traitant des données provenant de sous-systèmes dans un système de traitement de données, comprenant la mémorisation d'une pluralité de tables dans des moyens formant bases de données (32), chaque table conprenant un nombre de colonnes et de lignes, l'initialisation des moyens formant bases de données par un dispositif (31) de gestion des bases de données comprenant un dispositif (34) d'acheminement des ordres et une pluralité de processeurs (35) de traitement d'ordres, la réception d'un ordre de copiage par le dispositif d'acheminement d'ordres et sa transmission à un processeur de copiage (88) faisant partie de ladite pluralité de processeurs de traitement d'ordres, la définition de parties sélectionnées d'une table source mémorisée dans la base de données par un processeur (85) de traitement d'ordres de sélection, et le copiage des parties sélectionnées par le processeur de copiage dans une table de destination,
caractérisé par le transfert d'un ordre de création depuis le dispositif d'acheminement des ordres à un processeur de création (89), la définition, par un ordre de sélection de lignes, de nouvelles lignes sélectionnées devant être créées dans la table de destination, des lignes sélectionnées contenant au moins une valeur de code associée au temps, l'analyse de l'information (123) de l'ordre de sélection de lignes par le processeur de création, la définition du nombre de lignes devant être créées, l'initialisation et l'enregistrement de la première ligne dans la table de destination, lors d'un premier pas (124,125) et la répétition du pas d'initialisation et d'enregistrement (125-128) pour d'autres lignes jusqu'à ce qu'une nouvelle ligne pour chaque combinaison possible de codes temporels dans la gamme sélectionnée ait été créée, lesdites lignes créées contenant une information définie par l'ordre de sélection de lignes, comprenant notamment lesdits codes temporels.

**12.** Procédé selon la revendication 11, comprenant en outre la collecte sélective et le transfert sélectif de données depuis les sous-systèmes dans des tables dans une première base de données (41) desdits moyens formant bases de données, lesdits moyens formant bases de données comprenant une base de données VSAM permettant un accès de données dans le format des tables, l'accès de données à partir de telles tables, leur présentation à une unité d'utilisateur (4), le raccordement de la première base de données (41) à une base auxiliaire de données (42) dans lesdits moyens formant bases de données, le copiage de parties sélectionnées d'au moins une table située dans la première base de données dans une table correspondante située dans la base de données auxiliaires, et la mise à jour de ladite table correspondante, la présentation de données sélectionnées de la table à partir des deux bases de données dans l'unité d'utilisateur et la déconnexion desdites deux bases de données pour l'exécution d'une opération indépendante de collecte et de présentation de données pour chaque base de données (41,42).

**13.** Procédé selon la revendication 12, selon lequel l'opération de présentation des données présente un ensemble combiné des données de la table située dans la première base de données (41) et des données situées dans une table correspondante dans la base auxiliaire de données (42).

**14.** Procédé selon la revendication 12 ou 13, selon lequel la première base de données mémorise un premier type de données comme par exemple des données réelles, et la base de données auxiliaires mémorise un second type de données tel que des données de prévision.

**15.** Procédé selon l'une quelconque des revendications 11-14, selon lequel lesdits moyens formant base de données (32) comprennent une pluralité de bases de données (41,42,46) et le système de traitement de données comprend une pluralité de sources de données (15-18) de sous-systèmes, et selon lequel une unité interactive de commande de production (70) mémorise, présente et modifie des spécifications pour les différentes bases de données (41,42,46) et leurs sources de données (15-18).

**Patentansprüche**

**1.** Datenbankprozessor zum Sammeln und Verarbeiten von Daten aus Untersystemen (5, 8-12) in einem Datenverarbeitungssystem, mit einem Datenbankmittel (32), das eine Mehrzahl von Tabellen speichert, bei denen jede mehrere Spalten und Reihen aufweist und mit einem Datenbankverwalter (31), der

EP 0 244 625 B1

aufweist: ein Hauptanschlußmodul (33) zur Speicherbereich- und Datenbankinitialisierung, eine Mehrzahl von Befehlsprozessoren (35) und einen Befehlsführer (34) zum Empfangen eines Befehls und zu seinem Übertragen an einen entsprechenden Befehlsprozessor (80-92), einen Kopierprozessor (88) in der Mehrzahl von Befehlsprozessoren zum Empfangen eines Kopierbefehls aus dem Befehlsführer und zum Kopieren ausgewählter Teile einer Quellentabelle in der Datenbank in eine Zieltabelle, wobei die ausgewählten Teile durch einen Auswahlbefehlsprozessor (85) definiert sind, gekennzeichnet durch einen Bildungsprozessor (89) zum Empfangen eines Bildungsbefehls aus dem Befehlsführer und zum Bilden ausgewählter neuer Reihen in der Zieltabelle, wobei die ausgewählten Reihen durch einen Reihenauswahlbefehl definiert sind, ausgewählte Reihen zumindest einen Schlüsselwert bezüglich der Zeit aufweisen, wodurch der Bildungsprozessor die Reihenauswahlbefehlsinformation (123) analysiert, die Anzahl der zu bildenden Reihen definiert, in einem ersten Schritt (124, 125) die erste Reihe initialisiert und sie in die Zieltabelle einschreibt und den Initialisierungs-und Schreibschritt (125-128) für weitere Reihen solange wiederholt, bis eine neue Reihe für jede mögliche Kombination von Zeitschlüsseln in dem ausgewählten Bereich gebildet wurde, wobei die gebildeten neuen Reihen eine Information enthalten, die durch den Reihenauswahlbefehl einschließlich insbesondere der Zeitschlüssel definiert ist.

2. Datenbankprozessor nach Anspruch 1, bei welchem die Reihenauswahlbefehlinformation in Beziehung zu Zeitperioden steht, die aus einer Kalendertabelle mit Jahres-, Monats- und Tages-Zeitinformationen entnommen sind.

3. Datenbankprozessor nach Anspruch 1, bei welchem die Mehrzahl von Befehlsprozessoren einen Einfügungsprozessor (90) aufweist, um Daten in die gebildeten neuen Reihen abzulegen.

4. Datenbankprozessor nach Anspruch 1, bei welchem die Datenbank eine VSAM (virtuelle Speicherzugriffsmethode)-Datenbank ist, die einen Datenzugriff in einem Tabellenformat ermöglicht und bei welchem die Quellentabelle und die Zieltabelle in derselben Datenbank (41) liegen.

5. Datenbankprozessor nach Anspruch 1, bei welchem die Datenbank eine VSAM-Datenbank ist und bei welchem die Quellentabelle in einer ersten Datenbank (41) liegt und die Zieltabelle in einer Hilfsdatenbank (42) liegt, wobei beide Datenbänke durch den Datenbankverwalter (31) kontrolliert werden.

6. Datenbankprozessor nach Anspruch 1 und 5, bei welchem die Mehrzahl von Befehlsprozessoren einen Verbindungsprozessor (91) zum Verbinden und Trennen der Hilfsdatenbank (42) mit der und von der ersten Datenbank (41) aufweist.

7. Datenbankprozessor nach irgendeinem der Ansprüche 1 bis 6, bei welchem ein Sammelbefehlprozessor (80) in dem Datenbankverwalter (31) Daten aus den Untersystemen (8-18) des Datenverarbeitungssystems sammelt und solche Daten in Zusammenfassungstabellen in der Datenbank (32) zusammenfaßt und bei welchem ein Berichtsprozessor (87) in dem Datenbankverwalter Zusammenfassungstabelle-Daten aus der Datenbank selektiv an eine an das System angeschlossene Benutzerstation (4) überträgt.

8. Datenbankprozessor nach Anspruch 7, bei welchem der Prozessor wie ein Protokoll-Postprozessor arbeitet, der Daten aus Untersystemprotokollen (5, 15-18) sammelt.

9. Datenbankprozessor nach Anspruch 8, bei welchem der Prozessor wie ein Serviceausmaß-Berichter arbeitet, der Verwaltungsberichte bezüglich Leistung, Verfügbarkeit, Betrieb und dergleichen des Datenverarbeitungssystems liefert.

10. Datenbankprozessor nach irgendeinem der Ansprüche 1 bis 9, bei welchem Fertigungskontrolledialog-Mittel (70) zum Speichern und Ändern von Datenbank (41, 42)- und Datenquelle (5, 15-18)-Spezifikationen vorgesehen sind.

11. Verfahren zum Betreiben eines Datenbankprozessors zum Sammeln und Verarbeiten von Daten aus Untersystemen in einem Datenverarbeitungssystem, das umfaßt: Speichern einer Mehrzahl von Tabellen in einem Datenbankmittel (32), bei denen jede mehrere Spalten und Reihen aufweist, Initialisieren des Datenbankmittels durch einen Datenbankverwalter (31), der aufweist: einen Befehlsführer (34) und

18

eine Mehrzahl von Befehlsprozessoren (35), Empfangen eines Kopierbefehls vor dem Befehlsführer und sein Übertragen an einen Kopierprozessor (88) in der Mehrzahl von Befehlsprozessoren, Definieren ausgewählter Teile einer gespeicherten Quellentabelle in der Datenbank durch einen Auswahlbefehlsprozessor (85) und Kopieren der ausgewählten Teile durch den Kopierprozessor in die Zieltabelle,

gekennzeichnet durch das Übertragen eines Bildungsbefehls aus dem Befehlsführer in einen Bildungsprozessor (89), Definieren ausgewählter, neuer, in der Zieltabelle zu bildender Reihen durch einen Reihenauswahlbefehl, wobei ausgewählte Reihen zumindest einen Schlüsselwert bezüglich der Zeit aufweisen, Analysieren der Reihenauswahlbefehlsinformation (123) durch den Bildungsprozessor, Definieren der Anzahl der zu bildenden Reihen, Initialisieren und Schreiben der ersten Reihe in die Zieltabelle in einem ersten Schritt (124, 125) und Wiederholen des Initialisier- und Schreibschrittes (125-128) für weitere Reihen solange, bis eine neue Reihe für jede mögliche Kombination von Zeitschlüsseln in dem ausgewählten Bereich gebildet wurde, wobei die gebildeten neuen Reihen eine Information enthalten, die durch den Reihenauswahlbefehl einschließlich insbesondere der Zeitschlüssel definiert ist.

12. Verfahren nach Anspruch 11, das ferner umfaßt: selektives Sammeln und Übertragen von Daten aus den Untersystemen in Tabellen in einer ersten Datenbank (41) des Datenbankmittels, wobei das Datenbankmittel eine VSAM-Datenbank aufweist, die einen Datenzugriff in einem Tabellenformat ermöglicht, Zugreifen auf Daten aus solchen Tabellen und ihr Darstellen auf einer Benützereinheit (4), Verbinden der ersten Datenbank (41) mit einer Hilfsdatenbank (42) in dem Datenbankmittel, Kopieren ausgewählter Teile zumindest einer Tabelle in der ersten Datenbank in eine entsprechende Tabelle in der Hilfsdatenbank und Aktualisieren der entsprechenden Tabelle, Darstellen ausgewählter Tabellendaten aus beiden Datenbänken auf der Benützereinheit und Trennen der zwei Datenbänke zum Aktivieren eines unabhängigen Datensammlungs- und Darstellungsvorganges für jede Datenbank (41, 42).

13. Verfahren nach Anspruch 12, bei welchem der Datendarstellungsvorgang eine kombinierte Sicht von Tabellendaten in der ersten Datenbank (41) und von Tabellendaten in einer entsprechenden Tabelle in der Hilfsdatenbank (42) darstellt.

14. Verfahren nach Anspruch 12 oder 13, bei welchem die erste Datenbank eine erste Art von Daten, wie aktuelle Daten speichert und die Hilfsdatenbank eine zweite Art von Daten, wie Prognosendaten speichert.

15. Verfahren nach irgendeinem der Ansprüche 11 bis 14, bei welchem das Datenbankmittel (32) eine Mehrzahl von Datenbänken (41, 42, 46) aufweist und das Datenverarbeitungssystem eine Mehrzahl von Untersystemdatenquellen (15-18) aufweist und bei welchem ein Fertigungskontrolledialog (70) Spezifikationen für die verschiedenen Datenbänke (41, 42, 46) und ihre Datenquellen (15-18) speichert, darstellt und ändert.

FIG 1

LOG PROCESSOR 30

41
42
43 → MAINFILE
44 → WORKFILE
A FILE ← 45
A WORK ← 46
32

DATA BASE INTERFACE ── 36

DP SYSTEM 1

65
PANEL LIBR | TABLE LIBR
66

5

6

3

SUB SYSTEMS SMF
──
──
IMS
( 8–12 )

80 ── COLLECT
81 ── EDIT
82 ── UNLOAD
83 ── LOAD
84 ── VIEW
85 ── SELECT
86 ── SORT
87 ── REPORT
88 ── COPY
89 ── CREATE
90 ── FIT
91 ── CONNECT

92

2

63          64

61

ISPF

67

68

69

62          71

USER TERMINAL ── 4

COMMAND ROUTER ── 34

37

MAIN LINE ── 33

PCD ── 70

DBM

31

FIG 2

```
0  0  1  1  2  2  3  3  4  4  5  5  6  6  7  7
1  5  0  5  0  5  0  5  0  5  0  5  0  5  0  5

SLR PRODUCTION CONTROL         PCD PRIMARY OPTION MENU
OPTION ===>

Select the desired option:

  1  DATA BASE          SLR Data Base Management

  2  DATA SOURCE        Data Source Management










        DREBFE


0  0  1  1  2  2  3  3  4  4  5  5  6  6  7  7
1  5  0  5  0  5  0  5  0  5  0  5  0  5  0  5
```

FIG 3a

```
0  0  1  1  2  2  3  3  4  4  5  5  6  6  7  7
1  5  0  5  0  5  0  5  0  5  0  5  0  5  0  5

PRODUCTION CONTROL              DATA BASE
COMMAND ===>

To select which data base to work with, type S to the left of the
desired item (DBID) and press enter. To create a new item, type
SELECT dbid in the command field and press enter.

   DBID        Auto Backup Date    Time  Description
---------------------------------------------------------------------










        DREBFER


0  0  1  1  2  2  3  3  4  4  5  5  6  6  7  7
1  5  0  5  0  5  0  5  0  5  0  5  0  5  0  5
```

FIG 3b

```
 0   0   1   1   2   2   3   3   4   4   5   5   6   6   7   7
 1   5   0   5   0   5   0   5   0   5   0   5   0   5   0   5
```

```
PRODUCTION CONTROL              DATA BASE ACTION
SELECTION ===>

Data base ID:

Select one of the options below:

   1  DB MODIFY            Modify Data Base Specification

   2  DB DELETE            Delete Data Base Specification

   3  BACKUP               Create/Modify Backup Specification




          DREBFERX
```

```
 0   0   1   1   2   2   3   3   4   4   5   5   6   6   7   7
 1   5   0   5   0   5   0   5   0   5   0   5   0   5   0   5
```

## FIG. 3c

```
 0   0   1   1   2   2   3   3   4   4   5   5   6   6   7   7
 1   5   0   5   0   5   0   5   0   5   0   5   0   5   0   5
```

```
PRODUCTION CONTROL          DB MODIFY, NEW DATA BASE
COMMAND ===>

  DATA BASE ID   ===>       Data Base Identifier (Ex. PROD, TEST, DEV, ...)
  AUTO COLLECT   ===>       Enter YES or NO

  DESCRIPTION    ===>

  MAINFILE       ===>
  WORKFILE       ===>

    Press the ENTER key to verify fields and add this new data base ID
    Press the END key to exit without adding this new data base ID




          DREBFERA
```

```
 0   0   1   1   2   2   3   3   4   4   5   5   6   6   7   7
 1   5   0   5   0   5   0   5   0   5   0   5   0   5   0   5
```

## FIG 3d

23

```
0  0  1  1  2  2  3  3  4  4  5  5  6  6  7  7
1  5  0  5  0  5  0  5  0  5  0  5  0  5  0  5

 PRODUCTION CONTROL          DB MODIFY, EXISTING DATA BASE
 COMMAND ===>

  DATA BASE ID:               Data Base Identifier (Ex. PROD, TEST, DEV, ...)
  AUTO COLLECT    ===>        Enter YES or NO

  DESCRIPTION   . ===>

  MODEL DSN       ===>

  MAINFILE        ===>
  WORKFILE        ===>

  CURRENT BACKUP ===>
  HIGHEST BACKUP:

    Press the ENTER key to verify fields and modify changed fields.
    Press the END key to exit without modifying changed fields.



    DREBFERE


0  0  1  1  2  2  3  3  4  4  5  5  6  6  7  7
1  5  0  5  0  5  0  5  0  5  0  5  0  5  0  5
```

FIG 3e

```
0  0  1  1  2  2  3  3  4  4  5  5  6  6  7  7
1  5  0  5  0  5  0  5  0  5  0  5  0  5  0  5

 PRODUCTION CONTROL          CONFIRM DELETE REQUEST
 COMMAND ===>

  Data base ID:
  Number of Entries:

 Instructions:

  Press ENTER key to confirm delete request.
  Press END key to cancel delete request.













    DREBFERD


0  0  1  1  2  2  3  3  4  4  5  5  6  6  7  7
1  5  0  5  0  5  0  5  0  5  0  5  0  5  0  5
```

FIG 3f

24

```
   0    0    1    1    2    2    3    3    4    4    5    5    6    6    7    7
   1    5    0    5    0    5    0    5    0    5    0    5    0    5    0    5

   PRODUCTION CONTROL              BACKUP
   COMMAND ===>

    Data base ID:

    Modify dataset name by overtyping
    Insert new entry by line command I
    Delete existing entry by linecommand D

        NUMBER  BACKUP DATASET NAME                            DATE    TIME












        DREBFERS


   0    0    1    1    2    2    3    3    4    4    5    5    6    6    7    7
   1    5    0    5    0    5    0    5    0    5    0    5    0    5    0    5
```

## FIG 3g

```
   0    0    1    1    2    2    3    3    4    4    5    5    6    6    7    7
   1    5    0    5    0    5    0    5    0    5    0    5    0    5    0    5

   PRODUCTION CONTROL           ADD/MODIFY BACKUP DATA SET
   COMMAND ===>

    Enter or modify the appropriate fields.

    DSNAME ===>



    For information only:

       Data base ID:
         Number:            Backup dataset number.
         Date:              Date the backup was entered into this table.
         Time:              Time the backup was entered into this table.

    Press the ENTER key to verify fields and add/change this backup.
    Press the END key to exit without adding/changing this backup.



       DREBFER 1


   0    0    1    1    2    2    3    3    4    4    5    5    6    6    7    7
   1    5    0    5    0    5    0    5    0    5    0    5    0    5    0    5
```

## FIG 3h

25

```
0   0   1   1   2   2   3   3   4   4   5   5   6   6   7   7
1   5   0   5   0   5   0   5   0   5   0   5   0   5   0   5

PRODUCTION CONTROL             DATA SOURCE
COMMAND ===>

To select a data source and system, type S to the left of the
desired item and press enter. To create a new item, type
SELECT sourcename systemname (systemname is optional) in the
command field and press enter.

   Source System | DBID Auto  Description
   ----------------------------------------------------------------
    SMF   SYSA     PROD  Y    Production system A
    SMF   SYSB     PROD  Y    Production system B
    SMF   SYSC     PROD  Y    Production system C
    SMF   SYSA     TEST  N    Test system A
    SMF   SYSB     TEST  N    Test system B
    SMF   SYSC     TEST  N    Test system C
   ******************************* BOTTOM OF DATA ******************************




   DREBFEL


0   0   1   1   2   2   3   3   4   4   5   5   6   6   7   7
1   5   0   5   0   5   0   5   0   5   0   5   0   5   0   5
```

## FIG 3i

```
0   0   1   1   2   2   3   3   4   4   5   5   6   6   7   7
1   5   0   5   0   5   0   5   0   5   0   5   0   5   0   5

PRODUCTION CONTROL           DATA SOURCE ACTION
SELECTION ===>

Data Source ID:
System:

Select one of the options below:

   1  DATA SOURCE SPEC    Modify Data Source Specifications

   2  DATA SOURCE DELETE  Delete Data Source Specifications

   3  SOURCE DS           Add/Modify source datasets








   DREBFEL


0   0   1   1   2   2   3   3   4   4   5   5   6   6   7   7
1   5   0   5   0   5   0   5   0   5   0   5   0   5   0   5
```

## FIG 3j

```
   0  0   1   1   2   2   3   3   4   4   5   5   6   6   7   7
   1  5   0   5   0   5   0   5   0   5   0   5   0   5   0   5

   PRODUCTION CONTROL         DATA SOURCE SPEC, NEW DATA SOURCE
   COMMAND ===>

   Enter values in the fields below. To exit without adding this new
   log type, type CANCEL on the COMMAND line above and press ENTER.

     DATA SOURCE        ===>       Log Type Mnemonic (Ex. SMF, IMS, OPC, ...)
     SYSTEM             ===>       System or Sub-system creating
                                   the log (optional).
     DBID               ===>       Data Base Identifier (Ex. PROD, TEST,...)
     AUTO COLLECT       ===>       Enter YES or NO
     DESCRIPTION        ===>
     COLLECT STMT       ===>

                                   Seq DS or member in PDS containing COLLECT
                                   command for this data source.
     EDIT COLLECT STMT ===>        Enter YES or NO




        DREBFELA

   0  0   1   1   2   2   3   3   4   4   5   5   6   6   7   7
   1  5   0   5   0   5   0   5   0   5   0   5   0   5   0   5
```

FIG 3k

```
   0  0   1   1   2   2   3   3   4   4   5   5   6   6   7
   1  5   0   5   0   5   0   5   0   5   0   5   0   5   0

   PRODUCTION CONTROL         DATA SOURCE SPEC, EXISTING DATA SOURCE
   COMMAND ===>

     Data source:                Log Type Mnemonic
     System:                     System or Sub-system Creating the Log
     Data base ID:               Data Base Identifier

     AUTO COLLECT       ===>      Enter YES or NO
     DESCRIPTION        ===>
     COLLECT STMT       ===>

                                 Seq DS or member in PDS containing COLLECT
                                 command for this data source.
     EDIT COLLECT STMT ===>      Enter YES or NO

      Press the ENTER key to verify fields and save any changes.
    - Press the END key to exit without changing any fields.




        DREBFELE

   0  0   1   1   2   2   3   3   4   4   5   5   6   6   7
   1  5   0   5   0   5   0   5   0   5   0   5   0   5   0
```

FIG 3l

```
0   0   1   1   2   2   3   3   4   4   5   5   6   6   7
1   5   0   5   0   5   0   5   0   5   0   5   0   5   0

 PRODUCTION CONTROL          CONFIRM DELETE REQUEST
 COMMAND ===>

  Data source:
  System:
  Number of Rows:

 Instructions:

  Press ENTER key to confirm delete request.
  Press END key to cancel delete request.









      DREBFELD

0   0   1   1   2   2   3   3   4   4   5   5   6   6   7
1   5   0   5   0   5   0   5   0   5   0   5   0   5   0
```

FIG 3m

```
0   0   1   1   2   2   3   3   4   4   5   5   6   6   7
1   5   0   5   0   5   0   5   0   5   0   5   0   5   0

 PRODUCTION CONTROL                SOURCE DATA SET
 COMMAND ===>

  Insert new entry by line command I
  Delete existing entry by linecommand D

   Date      Time   Source dataset name










      DREBFELS

0   0   1   1   2   2   3   3   4   4   5   5   6   6   7
1   5   0   5   0   5   0   5   0   5   0   5   0   5   0
```

FIG 3n

```
 0   0   1   1   2   2   3   3   4   4   5   5   6   6   7   7
 1   5   0   5   0   5   0   5   0   5   0   5   0   5   0   5

PRODUCTION CONTROL          ADD/MODIFY SOURCE DATASET
COMMAND ===>

Enter or modify the appropriate fields.

  DSNAME ===>
                    Fully qualified dataset name, without quotes.
                    NOTE: The dataset must be cataloged.
  BACKUP ===>       Highest backup when this log was first collected.
  STATUS ===>       Current dataset status (NEW, PROC, FAIL, BUSY).
  CODE   ===>       Reason code for the associated status.

For information only. cannot be modified.

  DATE:             Date the log was entered into this table.
  TIME:             Time the log was entered into this table.

    Press the ENTER key to verify fields and add/change this log.
    Press the END key to exit without adding/changing this log.



    DREBFEL 1


 0   0   1   1   2   2   3   3   4   4   5   5   6   6   7   7
 1   5   0   5   0   5   0   5   0   5   0   5   0   5   0   5
```

FIG 3p

```
        ┌─────────────────────┐
        │    SET UP ACCESS     │
        │   TO TARGET TABLE    │──── 101
        └─────────────────────┘
                   │
                   ▼
        ┌─────────────────────┐
        │    SET UP ACCESS     │
        │   TO SOURCE TABLE    │──── 102
        └─────────────────────┘
                   │
                   ▼
        ┌─────────────────────┐
        │       SET UP         │
        │   TRANSFORMATION     │──── 103
        └─────────────────────┘
                   │
                   ▼
        ┌─────────────────────┐
        │    SET UP DEFAULT    │──── 104
        └─────────────────────┘
                   │
                   ▼
        ┌─────────────────────┐
        │      READ A ROW      │──── 105
        └─────────────────────┘
                   │
                   ▼
        ┌─────────────────────┐
        │   INITIALIZE TARGET  │──── 106
        └─────────────────────┘
                   │
                   ▼
        ┌─────────────────────┐
        │      TRANSFORM       │
        │     SOURCE ROW       │──── 107
        └─────────────────────┘
                   │
                   ▼
        ┌─────────────────────┐
        │       WRITE          │
        │  TRANSFORMED ROW     │──── 108
        └─────────────────────┘
                   │
                   ▼
              ◇ END ◇──── 109
        NO   /       \
     ◄───────         
                   │ YES
                   ▼
        ┌─────────────────────┐
        │     TERMINATE        │
        │    TABLE ACCESS      │──── 110
        └─────────────────────┘
```

FIG 4

30

CHECK TABLE ——— 120

NO ——— CHECK TIME KEYS ——— 121

YES

START PROCESSING ——— 122

ANALYZE TIME KEYS ——— 123

INITIALIZE FIRST ROW ——— 124

WRITE ROW ——— 125

FIND TIME KEY ——— 126

INITIALIZE NEXT ROW ——— 127

NO ——— END ? ——— 128

TERMINATE PROCESSING ——— 129

FIG 5

FIG 6